# EUROPÄISCHE PATENTSCHRIFT

(11) **EP 1 069 147 B1**
(45) Veröffentlichungstag und Bekanntmachung des Hinweises auf die Patenterteilung: **08.03.2006**
(21) Anmeldenummer: 00112733.1
(22) Anmeldetag: 16.06.2000
(51) Int. Cl.: C08G 65/329, C08G 65/26, C23F 11/173, C08G 65/324, C08G 65/333, C23F 11/14

(54) **Korrosionsinhibitoren mit verbesserter Wasserlöslichkeit**
Corrosion inhibitor with improved water solubility
Inhibiteur de corrosion à solubilité dans l' eau améliorée

(30) Priorität: 02.07.1999 DE 19930683
(43) Veröffentlichungstag der Anmeldung: 17.01.2001
(73) Patentinhaber: Clariant GmbH, 65929 Frankfurt am Main (DE)
(72) Erfinder: Feustel, Michael, Dr., 55278 Köngernheim (DE); Klug, Peter, Dr., 63762 Grossostheim (DE)

(56) Entgegenhaltungen:
- FR-A- 2 407 258
- US-A- 5 393 464

## Beschreibung

Die vorliegende Erfindung betrifft ein Additiv und ein Verfahren zur Korrosionsinhibierung an Einrichtungen zur Förderung und Transport von Kohlenwasserstoffen in der Erdölförderung und -verarbeitung.

In technischen Prozessen, bei denen Metalle mit Wasser oder auch mit Öl-Wasser-Zweiphasensystemen in Kontakt kommen, besteht die Gefahr der Korrosion. Besonders in Salzwassersystemen, wie sie in Erdölgewinnungs- und Verarbeitungsprozessen vorkommen, ist diese Gefahr besonders ausgeprägt. Ohne spezielle Additive zum Schutz der eingesetzten Ausrüstungen ist die Ausbeutung einer Lagerstätte und die Verarbeitung des Erdöls unvollständig.

Solche Korrosionschutzmittel sind zwar schon seit langem bekannt, jedoch in vielerlei Hinsicht noch nicht ausreichend. Viele Produkte, z.B. Amide/Imidazoline aus Fettsäuren und Polyaminen, sind zu sehr öllöslich und sind in der korrosiven Wasserphase aufgrund ungünstiger Verteilungsgleichgewichte (partitioning) nur in geringer Konzentration vorhanden. Sie sind daher als Korrosionsschutzmittel nur wenig wirksam.

FR-A-2 407 258 beschreibt Amide carboxymethylierter oligomerer Polyethylenglykolmonoalkylether der Struktur RO(CH₂CH₂O)ₙCH₂CONR¹R², wobei R ein aliphatischer Rest mit 8-20 Kohlenstoffatomen oder ein mit einem C₈-C₁₂₋Alkylrest substituierter Phenylrest ist und R¹ und R² Wasserstoff oder Alkylreste mit mindestens 3 Kohlenstoffatomen sind und deren Anwendung als Korrosionsschutzmittel, Detergenz-Additiv oder Anti-Pollution-Additiv für Kraftstoffe. Diese Amide besitzen aber keine freien Aminofunktionen mehr und sind weniger wirksam als die erfindungsgemäßen Produkte.

Aufgabe der vorliegenden Erfindung war es, Korrosionschutzmittel zu finden, die bei gutem oder verbessertem Korrosionschutz auch eine verbesserte Wasserlöslichkeit im Vergleich zu den Korrosionsschutzmitteln des Standes der Technik bieten.

Wie nun überraschenderweise gefunden wurde, zeigen Amidamine/Imidazoline, die aus der Umsetzung von Polyglykolethercarbonsäuren mit Polyaminen erhältlich sind, diese Eigenschaften.

Gegenstand der Erfindung sind Verbindungen der Formel 1

R¹―O-(A―O)ₓ―(CH₂)_{y}―R² (1)

worin
- R¹: verzweigtes oder unverzweigtes C₄-C₃₀-Alkyl, -Alkenyl oder -Alkylaryl,
- A: C₂-C₄ Alkylen,
- x: eine ganze Zahl von 1 bis 100,
- y: 1, 2, 3 oder 4,
- R²: ein Rest ausgewählt aus Strukturen der Formeln 2 und 3

―CO―NR³R⁴ (2)

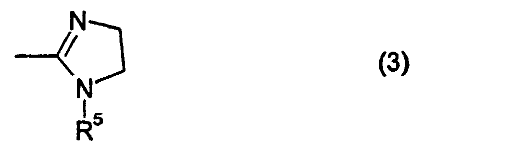

worin einer der Reste R³ und R⁴ eine Kohlenwasserstoffkette bedeutet, welche wenigstens eine freie NH- oder NH₂-Gruppe aufweist, und der andere Rest Wasserstoff oder eine Kohlenwasserstoffkette bedeutet, welche wenigstens eine freie NH- oder NH₂-Gruppe aufweist und R⁵ Wasserstoff oder eine Kohlenwasserstoffkette bedeutet, welche wenigstens eine freie NH- oder NH₂₋Gruppe aufweist.

Ein weiterer Gegenstand der Erfindung ist die Verwendung der so definierten Verbindungen als Korrosionsinhibitor.

R¹ bedeutet in einer bevorzugten Ausführungsform einen C₈-C₂₄, insbesondere einen C₁₂-C₁₈-Alkyl- oder Alkenylrest. Steht R¹ für einen aromatischen Rest, so ist ein Phenylrest mit Alkylsubstitution zwischen 4 und 12 Kohlenstoffatomen bevorzugt.

A steht vorzugsweise für einen Ethylen- oder Propylenrest, insbesondere für einen Ethylenrest. X bedeutet vorzugsweise eine Zahl von 1 bis 30, insbesondere 2 bis 15.

Y steht vorzugsweise für 1 oder 2, vorzugsweise für 1.

Der Substituent R² muß eine freie primäre oder sekundäre Aminogruppe tragen. Dies kann in einer Ausführungsform dadurch geschehen, daß einer der Substituenten R³, R⁴ oder R⁵ Wasserstoff bedeutet. Steht R² für Formel 2, dann können R³ und R⁴ nicht gleichzeitig Wasserstoff bedeuten. Steht R² für Formel 3, dann kann R⁵ Wasserstoff bedeuten.

Die Reste R³/R⁴ oder R⁵ können für Kohlenwasserstoffketten stehen, welche wenigstens eine freie primäre oder sekundäre Aminogruppe enthalten. In einer bevorzugten Ausführungsform umfassen die genannten Kohlenwasserstoffketten 1 bis 10 primäre und/oder sekundäre Aminogruppen. Die Kohlenwasserstoffketten enthalten darüber hinaus vorzugsweise 1 bis 30, insbesondere 1 bis 20 Kohlenstoffatome. Die Kohlenwasserstoffketten können neben den Stickstoffatomen, die die primären und/oder sekundären Aminogruppen bilden, weitere Heteroatome enthalten. Enthalten sie weitere Heteroatome, so ist Sauerstoff bevorzugt.

Die erfindungsgemäßen Verbindungen wie oben definiert sind durch Kondensation aus Ethercarbonsäuren der Struktur R¹-O(A-O)ₓ-(CH₂)_{y}-COOH mit Polyaminen mit mindestens einer primären oder sekundären Aminofunktion herstellbar.

Die zugrundeliegenden Ethercarbonsäuren können auf bekannten Wegen entweder durch Umsetzung eines mit Ethylenoxid und/oder Propylenoxid, bevorzugt mit Ethylenoxid umgesetzten C₄-C₃₀ Alkohols oder Alkylphenols und anschließende Oxidation der endständigen CH₂OH-Funktion zur Carbonsäure oder duch Alkylierung mit Chloressigsäurederivaten nach der Williamsonschen Ether-Synthese hergestellt werden.

Geeignete Basisalkohole sind C₄-C₃₀ Fettalkohole wie Butanol, Isobutanol, Pentanol, Hexanol, n-Octanol, Dodecanol, Tetradecanol, Hexadecanol, Octadecanol und Fettalkoholschnitte natürlichen oder synthetischen Ursprungs wie Oleylalkohol, Stearylalkohol, Behenylalkohol und Oxoalkohole verschiedener Kettenlänge. Ebenso geeignet sind verzweigte Alkohole wie 2-Ethylhexanol, Isononylalkohol, Isodecanol, Isotridecanol oder Isooctadecanol sowie Alkylphenole mit einem C₁-C₁₂-Alkylrest wie Nonylphenol.

Diese Alkohole werden mit Alkylenoxiden wie Ethylenoxid, Propylenoxid oder Butylenoxid oder Mischungen davon zum entsprechenden Glykolether umgesetzt, besonders bevorzugt ist Ethylenoxid. Die Produkte werden bevorzugt mit 1-30 mol Alkylenoxid, bevorzugt 2-15 mol Alkylenoxid umgesetzt.

Die Ethercarbonsäure kann aus diesen Alkylenglykol-Monoalkylethern durch Oxidation mit Luftsauerstoff unter Anwesenheit von Katalysatoren oder durch Oxidation mit Hypochlorit oder Chlorit mit oder ohne Katalysatoren hergestellt werden. Besonders bevorzugt ist die Alkylierung der Glykolether mit Chloressigsäurederivaten, bevorzugt mit Natriumchloracetat und Natronlauge nach der Williamson-Methode. Die freie Carbonsäure wird aus dem alkalischen Alkylierungsgemisch durch Ansäuern mit Mineralsäure (Salz-, Schwefelsäure) und Erhitzen über den Trübungspunkt und Abtrennen der organischen Phase erhalten. Die erfindungsgemäßen Amide bzw. Imidazoline werden aus diesen Ethercarbonsäuren durch Erhitzen mit Polyaminen und Abdestillieren von Wasser hergestellt.

Das molare Verhältnis zwischen Ethercarbonsäure und Polyamin wird so gewählt, daß nicht alle zur Verfügung stehenden Stickstoffatome in Amide überführt werden, so daß im Endprodukt freie Aminogruppen erhalten bleiben.

Als Amine eignen sich Alkylamine mit mindestens 2 und maximal ca. 10 Stickstoffatomen. Beispiele hierfür sind Ethylendiamin, 2-Aminoethylethanolamin, Propylendiamin, Diethylentriamin, Dipropylentriamin, Triethylentetramin, Tetraethylenpentamin, Pentaethylenhexamin und technische Schnitte dieser Amine. Weiterhin sind cyclische Polyamine wie Aminoethylpiperazin, Piperazin oder Bis(aminoethyl)piperazin oder 3-Morpholinopropylamin geeignet.

Die Kondensation von Ethercarbonsäure und Polyamin kann mit und ohne Katalysatoren durchgeführt werden, die Reaktionstemperatur liegt hierbei im Temperaturbereich von 100-220 °C, bevorzugt zwischen 140-200 °C. Zur besseren Abtrennung des Reaktionswassers kann Vakuum angelegt werden (bis ca. 1 mbar). Dies ist insbesondere dann nötig, wenn man hohe Gehalte von Imidazolin im Endprodukt erreichen will. Die erfindungsgemäßen Produkte fallen dann als gelbliche bis braune, klare Öle an.

Die erfindungsgemäßen Produkte können alleine oder in Kombination mit anderen bekannten Korrosionsinhibitoren eingesetzt werden. Im allgemeinen wird man soviel des erfindungsgemäßen Korrosionsinhibitors einsetzen, daß man unter den gegebenen Bedingungen einen ausreichenden Korrosionsschutz erhält. Typische Einsatzkonzentrationen bezogen auf 100 % Wirksubstanz sind 5-100 ppm, bevorzugt 10-30 ppm.Besonders geeignet als Korrosionsinhibitoren sind auch Mischungen der erfindungsgemäßen Produkte mit anderen literaturbekannten Korrosionsinhibitoren, wie Amidaminen und/oder Imidazolinen aus Fettsäuren und Polyaminen und deren Salzen, quartären Ammoniumsalzen, oxethylierten/oxpropylierten Aminen, Amphoglycinaten und -propionaten oder Betainen.

Wie die unten aufgeführten Beispiele zeigen, weisen die Produkte alle sehr gute Korrosionschutzeigenschaften bei niedriger Dosierung auf.

### Beispiel 1:

In einem 1 l-Vierhalskolben mit Rührer und Destillationsbrücke wurden unter Stickstoffatmosphäre 548,1 g (1,00 mol) einer Ethercarbonsäure auf Basis C₁₂/₁₄₋Fettalkohol + 1,8 mol Ethylenoxid (Gebrauchsmol aus der Säurezahl ermittelt; über Williamson-Ethersynthese aus dieser Vorstufe erhalten) und 103,2 g (1,00 mol) Diethylentriamin vereinigt, wobei eine Erwärmung auf 60°C auftrat. Anschließend wurde auf 150°C erhitzt. Bei dieser Temperatur wurde für 2 h Wasser abdestilliert, weiter auf 180°C erhitzt und nochmals für 2 h Wasser abdestilliert, wobei insgesamt 53,4 g Wasser abgeschieden wurden. Es wurde Vakuum angelegt und innerhalb 2 h bei 22 mbar weitere 88,8 g eines Amin-Wasser-Gemisches als Destillat erhalten. Nach Abkühlen wurde das verbleibende dunkle Öl filtriert. Es wurden 498,8 g eines braunen, klaren Öls mit Säurezahl 2,9 mg KOH/g, Basenstickstoff 2,09 % und einer Viskosität von 243 mPas bei 20°C erhalten.

### Beispiel 2:

Es wurden unter Reaktionsbedingungen analog Beispiel 1 aus 665,9 g (1,00 mol) einer Ethercarbonsäure auf Basis Oleyl/Cetylalkohol + 2,0 mol Ethylenoxid und 103,2 g (1,00 mol) Diethylentriamin 667,8 g eines klaren, braunen Öls mit Säurezahl 4,5 mg KOH/g, Basenstickstoff 1,85 % und einer Viskosität von 365 mPas bei 20°C erhalten.

### Beispiel 3:

Es wurde analog Beispiel 1 verfahren. Aus 786,7 g (1,00 mol) einer Ethercarbonsäure auf Basis Oleyl/Cetylalkohol + 8,0 mol Ethylenoxid und 103,2 g (1,00 mol) Diethylentriamin wurden 711,9 g eines klaren, braunen Öls mit Säurezahl 0,7 mg KOH/g, Basenstickstoff 1,65 % und einer Viskosität von 423 mPas bei 20°C erhalten.

### Beispiel 4:

Es wurde analog Beispiel 1 verfahren. Aus 743,3 g (1,00 mol) einer Ethercarbonsäure auf Basis C₁₄/₁₅-Oxoalkohol + 7,0 mol Ethylenoxid und 103,2 g (1,00 mol) Diethylentriamin wurden 694,8 g eines klaren, braunen Öls mit Säurezahl 2,2 mg KOH/g, Basenstickstoff 1,51 % und einer Viskosität von 380 mPas bei 20°C erhalten.

### Beispiel 5:

Es wurden unter Reaktionsbedingungen analog Beispiel 1 aus 729 g (1,00 mol) einer Ethercarbonsäure auf Basis C₁₄/₁₅-Oxoalkohol + 7,0 mol Ethylenoxid und 129 g (1,00 mol) N-Aminoethylpiperazin 783 g eines klaren, braunen Öls mit Säurezahl 2,4 mg KOH/g, Basensückstoff 2,94 % und einer Viskosität von 386 mPas bei 20°C erhalten.

### Beispiel 6:

Es wurden unter Reaktionsbedingungen analog Beispiel 1 aus 729 g (1,00 mol) einer Ethercarbonsäure auf Basis C₁₄/₁₅-Oxoalkohol + 7,0 mol Ethylenoxid und 94,7 g (0,50 mol) Tetraethylenpentamin 751 g eines klaren, braunen Öls mit Säurezahl 3,0 mg KOH/g, Basenstickstoff 2,12 % und einer Viskosität von 562 mPas bei 20°C erhalten.

### Beispiel 7:

In einem 1 l-Vierhalskolben mit Rührer und Destillationsbrücke wurden unter Stickstoffatmosphäre 743 g (1,00 mol) einer Ethercarbonsäure auf Basis C₁₄/₁₅₋Fettalkohol + 7 mol Ethylenoxid (Gebrauchsmol aus der Säurezahl ermittelt; über Williamson-Ethersynthese aus dieser Vorstufe erhalten) und 103,2 g (1,00 mol) Diethylentriamin vereinigt, wobei eine Erwärmung auf 60°C auftrat. Anschließend wurde auf 150 - 160°C erhitzt. Bei dieser Temperatur wurde 1 h Wasser abdestilliert, wobei insgesamt 54,3 g Wasser abgeschieden wurden. Nach Abkühlen wurde das verbleibende gelbe Öl filtriert. Es wurden 771 g eines gelben, klaren Öls mit Säurezahl 5,0 mg KOH/g, Basenstickstoff 2,97 % und einer Viskosität von 457 mPas bei 20 °C erhalten.

### Korrosionschutzuntersuchungen

Die Produkte wurden im Shell-wheel-test geprüft. Coupons aus C-Stahl (DIN 1.1203 mit 15 cm² Oberfläche) wurden in eine Salzwasser/Petroleum-Mischung (9:1,5 %ige NaCl-Lösung mit Essigsäure auf pH 3,5 gestellt) eingetaucht und bei einer Umlaufgeschwindigkeit von 40 rpm bei 70°C 24 h diesem Medium ausgesetzt. Die Dosierung des Inhibitors betrug 50 ppm einer 40 % Lösung des Inhibitors. Die Schutzwerte wurden aus der Massenabnahrne der Coupons, bezogen auf einen Blindwert, berechnet.

| Beispiel | Schutz |
|---|---|
| 1 | 81-84 |
| 2 | 82-85 |
| 3 | 81-83 |
| 4 | 82-85 |
| 5 | 80-82 |
| 6 | 84-87 |
| 7 | 86-88 |

Die Produkte wurden außerdem im LPR-Test (Testbedingungen analog ASTM D 2776) geprüft:

| Beispiel | Schutz nach | | |
|---|---|---|---|
| | 10 min | 30 min | 60 min |
| 1 | 4,6 | 67,8 | 93,1 |
| 2 | 31,4 | 70,6 | 84,3 |
| 3 | 78,2 | 87,4 | 90,8 |
| | 83,7 | 90,1 | 92,4 |
| 4 | 83,9 | 93,8 | 96,3 |
| | 76,2 | 91,3 | 94,6 |
| 5 | 86,1 | 92,6 | 94,8 |
| | 85,4 | 91,3 | 94,1 |
| 6 | 85,1 | 92,1 | 94,1 |
| | 90,9 | 95,3 | 96,2 |
| 7 | 81,3 | 86,5 | 90,8 |

## Patentansprüche

1. Verbindungen der Formel 1
R¹ ―O―(A―O)ₓ―(CH₂)_{y}― R² (1)
worin
R¹ verzweigtes oder unverzweigtes C₄-C₃₀-Alkyl, -Alkenyl oder -Alkylaryl,
A C₂-C₄-Alkylen,
x eine ganze Zahl von 1 bis 100,
y 1, 2, 3 oder 4,
R² ein Rest ausgewählt aus Strukturen der Formeln 2 und 3
―CO―NR³R⁴ (2) 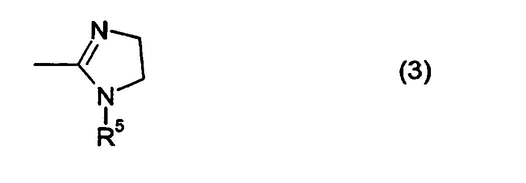
worin einer der Reste R³ und R⁴ eine Kohlenwasserstoffkette bedeutet, welche wenigstens eine freie NH- oder NH₂-Gruppe aufweist, und der andere Rest Wasserstoff oder eine Kohlenwasserstoffkette bedeutet, welche wenigstens eine freie NH- oder NH₂-Gruppe aufweist und R⁵ Wasserstoff oder eine Kohlenwasserstoffkette bedeutet, welche wenigstens eine freie NH- oder NH₂₋Gruppe aufweist.

2. Verbindungen gemäß Anspruch 1, worin A für eine Ethylen- oder Propylenrest steht.

3. Verbindungen gemäß Anspruch 1 und/oder 2, worin X für eine ganze Zahl von 1 bis 30 steht.

4. Verbindungen gemäß einem oder mehreren der Ansprüche 1 bis 3, worin R¹ für einen C₁₂-C₁₈-Alkyl- oder Alkenylrest steht.

5. Verbindungen gemäß einem oder mehreren der Ansprüche 1 bis 4, worin y für 1 steht.

6. Verwendung von Verbindungen gemäß Anspruch 1 bis 5 als Korrosionsinhibitoren.

## Claims

1. A compound of the formula 1
R¹―O―(A―O)ₓ―(CH₂)_{y}―R² (1)
in which
R¹ is branched or straight-chain C₄-C₃₀-alkyl, C₄-C₃₀-alkenyl or C₄-C₃₀-alkylaryl,
A is C₂-C₄-alkylene,
x is an integer from 1 to 100,
y is 1, 2, 3 or 4 and
R² is a radical selected from structures of the formulae 2 and 3
―CO―NR³R⁴ (2) 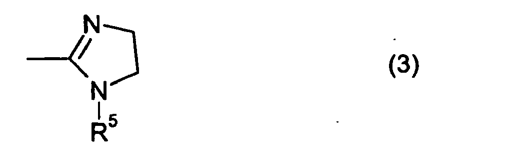
in which one of the radicals R³ and R⁴ is a hydrocarbon chain which has at least one free NH or NH₂ group and the other radical is hydrogen or a hydrocarbon chain which has at least one free NH or NH₂ group and R⁵ is hydrogen or a hydrocarbon chain which has at least one free NH or NH₂ group.

2. The compound as claimed in claim 1, in which A is an ethylene or propylene radical.

3. The compound as claimed in claim 1 and/or 2, in which X is an integer from 1 to 30.

4. The compound as claimed in one or more of claims 1 to 3, in which R¹ is a C₁₂-C₁₈-alkyl or alkenyl radical.

5. The compound as claimed in one or more of claims 1 to 4, in which y is 1.

6. The use of a compound as claimed in any of claims 1 to 5 as a corrosion inhibitor.

## Revendications

1. Composés de formule 1
R¹―O―(A―O)ₓ―(CH₂)_{y}―R² (1)
dans laquelle
R¹ représente un groupe alkyle, alcényle ou alkylaryle en C₄ à C₃₀ ramifié ou non ramifié,
A représente un groupe alkylène en C₂ à C₄,
x représente un nombre entier de 1 à 100,
y représente 1, 2, 3 ou 4,
R² représente un radical choisi dans les structures de formules 2 et 3
―CO―NR³R⁴ (2) 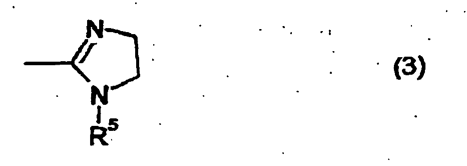
dans lesquelles l'un des radicaux R³ et R⁴ représente une chaîne hydrocarbure, qui présente au moins un groupe libre NH ou NH₂, et l'autre radical représente un atome d'hydrogène ou une chaîne hydrocarbure qui présente au moins un groupe NH ou NH₂ libre et R⁵ représente un atome d'hydrogène ou une chaîne hydrocarbure qui présente au moins un groupe NH ou NH₂ libre.

2. Composés selon la revendication 1, A représentant un radical éthylène ou propylène.

3. Composés selon la revendication 1 et/ou 2, X représentant un nombre entier de 1 à 30.

4. Composés selon l'une quelconque ou plusieurs des revendications 1 à 3, R¹ représentant un radical alkyle ou alcényle en C₁₂ à C₁₈.

5. Composés selon l'une quelconque ou plusieurs des revendications 1 à 4, y représentant 1.

6. Utilisation de composés selon la revendication 1 à 5 en tant qu'inhibiteurs de corrosion.
